**Europäisches Patentamt**

**European Patent Office**

**Office européen des brevets**

(19)

(11) Numéro de publication: **0 183 576 B1**

# (12) FASCICULE DE BREVET EUROPEEN

(45) Date de publication du fascicule du brevet:
**10.01.90**

(51) Int. Cl.⁴: **H 02 K 21/04**

(21) Numéro de dépôt: **85401950.2**

(22) Date de dépôt: **07.10.85**

(54) **Machine tournante à aimants permanents.**

(30) Priorité: **22.10.84 FR 8416110**

(43) Date de publication de la demande:
**04.06.86 Bulletin 86/23**

(45) Mention de la délivrance du brevet:
**10.01.90 Bulletin 90/2**

(84) Etats contractants désignés:
**AT BE CH DE GB IT LI NL SE**

(56) Documents cités:
**DE-A- 3 243 243**
**FR-A- 1 439 764**
**US-A- 3 555 327**

(73) Titulaire: **ELECTROMECANISMES R.F.B. Société Anonyme, 23 Bd Bonne Nouvelle, F-75002 Paris (FR)**

(72) Inventeur: **Secher, Bernard, Le Madiran B 23 Boulevard des Minimes, F-31200 Toulouse (FR)**
Inventeur: **Simon, Roger, 17 Avenue Diderot, F-95400 Arnouville Les Gonesses (FR)**

(74) Mandataire: **Bernasconi, Jean et al, Cabinet Michel Lemoine 13 Boulevard des Batignolles, F-75008 Paris (FR)**

## Description

La présente invention concerne les machines tournantes a aimants telles que les génératrices ou alternateurs et a trait notamment à la régulation de la tension de sortie des génératrices ou des alternateurs entraînés par des machines motrices, et elle est plus particulièrement relative à un alternateur comportant des moyens de régulation incorporés. Elle concerne cependant également les moteurs tels que les moteurs synchrones avec adaptation du flux.

Dans de nombreuses applications, un alternateur est entraîné par une machine motrice pour alimenter des charges ayant un fonctionnement indépendant de celui de ladite machine motrice.

La vitesse de rotation de la machine motrice est sujette à de multiples variations qui résultent du travail demandé à la machine. Ces variations sont notamment sensibles dans le cas des moteurs à turbine à gaz.

On sait par ailleurs que la tension de sortie à flux constant de l'alternateur est directement liée à la vitesse de la turbine et il est en conséquence nécessaire de prévoir des moyens pour maintenir constante la tension de sortie de l'alternateur alimentant les charges.

Dans ce but, US-A 3 671 788 décrit un alternateur comprenant des bobinages de puissance et de commande pour faire varier le flux magnétique et donc la tension de sortie. Le rotor et le stator de cet alternateur présentent une structure particulière compliquée et donc coûteuse, comportant des shunts de section radiale en L assemblés pour former une structure en U entre les branches de laquelle est disposé un bobinage de commande tandis que les bobinages de puissance sont disposés autour de ces branches.

US-A 3 713 015 décrit en alternateur comportant un dispositif automatique de régulation de tension. Cet alternateur comprend un rotor en deux parties montées coaxialement sur un arbre commun et dont les positions relatives sont réglables angulairement au moyen d'un bobinage de commande faisant varier ainsi les positions des pôles respectifs de ces rotors pour permettre une régulation de la tension de sortie de l'alternateur.

Ces deux agencements différents présentent plusieurs inconvénients parmi lesquels des circuits et/ou des mécanismes compliqués.

FR-A 1 439 764 décrit une machine tournante du type à aimants permanents permettant de réguler la tension ou la vitesse de rotation, en dépit du caractère inréglable des aimants permanents, en utilisant un enroulement fixe de régulation permettant d'ajouter ou de soustraire un flux partiel au flux des aimants, de façon à affaiblir ou renforcer le flux utile traversant le stator. Dans ce but, cette machine comporte un shunt magnétique commandé par un bobinage d'excitation de façon à canaliser dans le rotor à aimant, y compris dans les aimants eux-mêmes, un flux auxiliaire dont le sens et la valeur peuvent être utilisés pour assurer l'effet de régulation.

Un tel dispositif présente cependant des inconvénients. Tout d'abord la nécessité d'un flux d'excitation traversant les aimants impose, l'utilisation d'aimants métalliques assez perméables, ce qui exclut la mise en oeuvre d'aimants modernes comme la samarium-cobalt, terres rares. En outre, si l'on utilisait des aimants très performants, on obtiendrait un effet de saturation dans les pièces polaires, à moins d'accepter volontairement, par construction, une diminution des performances. Ceci constituerait un obstacle à la miniaturisation. Enfin, l'existence de shunt magnétique entraîne un affaiblissement du flux utile provenant des aimants du rotor, ce flux pouvant se refermer sans agir sur le bobinage statorique.

L'invention a pour but de remédier à ces différents inconvénients et de fournir une machine tournante, telle que par exemple un alternateur, du type à aimants permanents, permettant de réguler la tension ou le flux en dépit du caractère inréglable des aimants permanents, ne présentant pas les inconvénients précités et permettant la réalisation de machines à hautes performances, de taille miniaturisée et pouvant utiliser des aimants peu perméables, et ceci suivant une fabrication simple et peu coûteuse.

Elle a pour objet à cet effet une machine tournante à aimants permanents comprenant, sur un arbre, un rotor à aimants permanents, un stator comportant un bobinage de puissance et entourant ledit rotor, au moins une bobine d'excitation fixe, de façon à générer un flux de régulation influant le flux total traversant le bobinage de puissance sur le stator, caractérisée en ce qu'elle comporte, dans le prolongement dudit rotor à aimants permanents, un second rotor homopolaire, en ce que le bobinage de puissance entoure les deux rotors à l'intérieur d'un stator commun, et en ce que ladite bobine d'excitation est agencée au regard du rotor homopolaire pour engendrer un flux traversant le rotor homopolaire et adressé au stator de sorte que celui-ci est traversé par la somme géométrique du flux des aimants et du flux provenant du rotor homopolaire.

On comprend que, grâce à cet agencement, on engendre un flux magnétique dont le sens peut être inversé en inversant le sens du courant dans la bobine d'excitation, ce qui permet, par le jeu de ce sens de circulation et de la valeur de ce courant, de faire varier le flux homopolaire, ce flux s'ajoutant à celui engendré par les aimants ou s'en retranchant pour réguler la machine.

Suivant une autre caractéristique de l'invention, à un aimant sur deux du premier rotor correspond une dent du second rotor.

D'autres caractéristiques et avantages de l'invention apparaîtront au cours de la description qui va suivre, faite en se référant au dessin annexé donné uniquement à titre d'exemple et dans lequel:

La fig. 1 est une vue en section longitudinale d'un alternateur suivant l'invention;

la fig. 2 est une vue en perspective de l'ensemble de rotors de l'alternateur représenté à la fig. 1;

la fig. 3 en est une vue en section transversale suivant la ligne III–III de la fig. 1;

la fig. 4 en est une vue en section transversale suivant la ligne IV–IV de la fig. 1.

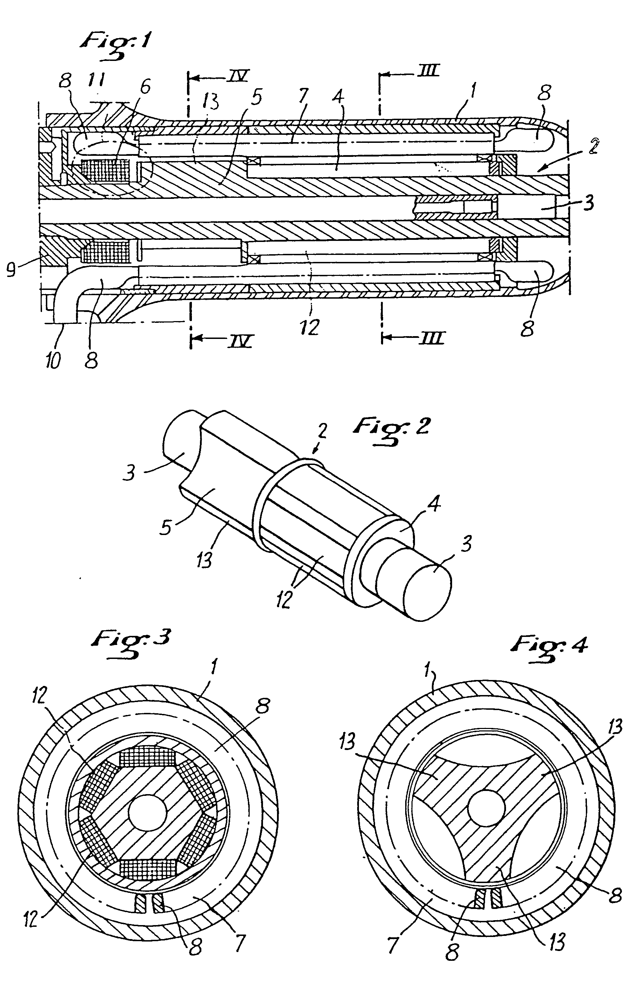

En se référant au dessin et plus particulièrement à la fig. 1, l'alternateur suivant l'invention comprend un stator 1 dans lequel est monté rotatif un ensemble de rotors désigné généralement par la référence 2.

L'ensemble de rotors 2 comprend un arbre rotatif 3 portant un premier rotor 4 du type classique à aimants permanents, en bout duquel est également monté un second rotor 5 du type homopolaire, à dents.

L'ensemble de rotors 2 est monté rotatif par les extrémités de l'arbre 3 dans des paliers à roulements (non représentés) à l'intérieur du carter 1 qui comporte les bobinages de puissance 7 fixés sur la paroi interne du carter 1 et s'étendant sur toute la longueur du premier et du second rotors.

La bobine d'excitation 6 est montée sur une pièce de support 9 solidaire du stator 1 et alimentée en courant de préférence continu mais pouvant aussi être modulé.

La tension de sortie de l'alternateur apparaît sur des conducteurs 10 destinés à être reliés à des charges alimentées par l'alternateur.

On comprend que, lorsque le bobinage d'excitation 6 est alimenté en courant continu, il engendre un flux magnétique 11 tel que représenté à la fig. 1, qui traverse les dents du rotor homopolaire 5 et, si on considère une section du stator qui couvre l'ensemble du rotor, celle-ci est traversée par la somme géométrique du flux des aimants et du flux dans les dents du rotor homopolaire.

Par le jeu du sens de circulation du courant dans la bobine d'excitation 6, le flux 11 homopolaire peut être soit additif soit soustractif par rapport au flux engendré par les aimants du rotor 4. On peut ainsi maintenir constante la tension de sortie de l'alternateur au moyen d'un dispositif électronique d'un type connu commandant l'alimentation du bobinage d'excitation 6 de façon appropriée en fonction de la vitesse d'entraînement en rotation du rotor et de la charge du générateur.

Suivant l'exemple représenté, le rotor 4 à aimants permanents comporte six aimants 12 et le rotor homopolaire 5 comporte trois dents 13, c'est-à-dire qu'à un aimant 12 sur deux correspond une dent 13 du rotor homopolaire 5. Bien entendu, le rotor 4 peut comporter un nombre quelconque d'aimants permanents, le rotor homopolaire comportant un nombre approprié de dents 13.

On comprend également que la bobine d'excitation peut être alimentée en courant alternatif ou haché ou encore que son alimentation peut être interrompue et rétablie en fonction des fluctuations de la vitesse de la machine motrice entraînant l'alternateur.

L'alternateur suivant l'invention est particulièrement avantageux pour être utilisé en étant monté en prise directe avec les turbines à gaz ou les turboréacteurs mais peut bien entendu être également utilisé avec toute autre machine motrice.

Bien entendu, l'alternateur peut faire l'objet de nombreuses variantes. Ainsi il pourrait comporter plusieurs rotors homopolaires, par exemple un à chaque extrémité de l'ensemble de rotors, ou bien plusieurs rotors à aimant, 5, par exemple disposés de part et d'autre d'un rotor homopolaire, les bobines d'excitation étant chaque fois montées au niveau du rotor homopolaire correspondant.

D'autre part la machine selon l'invention peut également être réalisé sous forme d'un moteur synchrone dont le flux peut être adapté au point de fonctionnement désiré par l'envoi d'un courant d'excitation convenable, par exemple en fonction de la charge et/ou de la vitesse du moteur, dans le bobinage d'excitation homopolaire.

**Revendications**

1. Machine tournante à aimants permanents comprenant, sur un arbre (3), un rotor (4) à aimants permanents (12), un stator comportant un bobinage de puissance (7) et entourant ledit rotor, au moins une bobine d'excitation (6) fixe, de façon à générer un flux de régulation influant le flux total traversant le bobinage de puissance (7) sur le stator, caractérisée en ce qu'elle comporte, dans le prolongement dudit rotor (4) à aimants permanents (12), un second rotor (5) homopolaire, en ce que le bobinage de puissance (7) entoure les deux rotors (4, 5) à l'intérieur d'un stator commun, et en ce que ladite bobine d'excitation (6) est agencée au regard du rotor homopolaire pour engendrer un flux traversant le rotor homopolaire et adressé au stator de sorte que celui-ci est traversé par la somme géométrique du flux des aimants et du flux provenant du rotor homopolaire.

2. Machine suivant la revendication 1, caractérisé en ce qu'à un aimant (12) sur deux du premier rotor (4) correspond une dent (13) du second rotor (5) homopolaire.

3. Machine suivant l'une des revendications 1 et 2, caractérisée en ce que la bobine d'excitation (6) est alimentée en courant continu.

4. Machine suivant l'une quelconque des revendications précédentes, caractérisée en ce que l'alimentation de la bobine d'excitation (6) est commandée par un dispositif électronique sensible à la vitesse de rotation de l'arbre (3).

**Patentansprüche**

1. Drehende Maschine mit Permanentmagneten, auf einer Welle (3), enthaltend einen Rotor (4) mit Permanentmagneten (12), einen eine Leitungswicklung (7) enthaltenden Stator und mindestens eine den besagten Rotor so umschließende feste Erregerspule (6), daß ein Regelungsfluß erzeugt wird, der den gesamten über die Leistungswicklung (7) strömenden Fluß auf dem Stator beeinflußt, dadurch gekennzeichnet, daß sie in der Verlängerung des besagten Rotors (4) mit Permanentmagneten (12) einen zweiten gleichpoligen Rotor (5) enthält, daß die Leistungswicklung (7) die beiden Rotoren (4, 5) im Innern eines gemeinsamen Stators umschließt, und daß die besagte Erregerspule (6) im Hinblick auf den gleichpoligen Rotor so angeordnet ist, daß ein Fluß erzeugt wird, der über den gleichpoligen Rotor in Richtung auf den Stator in der Weise fließt, daß dieser durch die geometrische Summe des Flusses der Magneten und des von dem gleichpoligen Rotor ausgehenden Flusses durchströmt wird.

2. Maschine gemäß Anspruch 1, dadurch gekennzeichnet, daß ein Magnet (12) von zwei des ersten Rotors (4) einem Zahn (13) des zweiten gleichpoligen Rotors (5) entspricht.

3. Maschine gemäß einem der Ansprüche 1 und 2, dadurch gekennzeichnet, daß die Erregerspule (6) mit Gleichstrom gespeist wird.

4. Maschine gemäß einem beliebigen der vorstehenden Ansprüche, dadurch gekennzeichnet, daß die Versorgung der Erregerspule (6) von einer elektronischen, auf die Drehzahl der Welle (3) empfindlich reagierenden Vorrichtung gesteuert wird.

**Claims**

1. A rotating machine including permanent magnets comprising on a shaft (3), a rotor (4) having permanent magnets, a stator having a power winding (7) and surrounding said rotor, at least one stationary excitation coil (6) to produce a regulation flux which affects the total flux passing through the power winding (7) on the stator, characterised in that it comprises a second homopolar rotor (5) extending from said rotor having permanents magnets (12), in that the power winding (7) surrounds the two rotors (4, 5), in a common stator, and in that said excitation coil (6) is disposed in confronting relation to the homopolar rotor, to produce a flux passing through the homopolar rotor and oriented to the stator, whereby the geometric sum of the flux of the permanent magnets and of the flux originating from the homopolar rotor passes through the stator.

2. A machine according to claim 1, characterised in that a tooth (13) of the second homopolar rotor (5) corresponds to every other magnet (12) of the first rotor (4).

3. A machine according to claim 1 or 2, characterised in that the excitation coil (6) is supplied with dc current.

4. A machine according to any one of the preceding claims, characterised in that the supply for the excitation coil (6) is controlled by an electronic device rersponsive to the speed of rotation of the shaft (3).

Fig.1

Fig.2

Fig.3

Fig.4